# EUROPEAN PATENT APPLICATION

(11) **EP 1 197 448 A1**
(43) Date of publication of application: **17.04.2002**
(21) Application number: 01906357.7
(22) Date of filing: 27.02.2001
(51) Int. Cl.: B65G 65/40

(54) **ARTICLE FEEDING AND DISCHARGING DEVICE**

(30) Priority: 28.02.2000 JP 2000051525
(71) Applicant: Anritsu Corporation, Minato-ku Tokyo 106-8570 (JP)
(72) Inventor: MATSUNAGA, Iruru, Sagamihara-shi, Kanagawa 229-1122 (JP); WATANABE, Kouichi, Atsugi-shi, Kanagawa 243-0814 (JP); ISHIDA, Kinya, Atsugi-shi, Kanagawa 243-0032 (JP)
(74) Representative: Bohnenberger, Johannes, Dr.
(86) International application number: PCT/JP01/01469
(87) International publication number: WO 01/62637

(57) **Abstract**

There is provided a method of creating a carbon to metal connection (16) by placing a portion of a carbon material (12) onto a metal material (14) at a location where a thermal or electrical contact is desired and then joining the carbon material (12) and metal material (14), thereby creating a uniform bond therebetween. Also provided by the present invention is a carbon material (12) having multiple sides and a metal material (14) joined to the carbon material (12) whereby the connection (16) is made by placing a portion of the carbon material (12) onto the metal material (14) at the location for the desired connection (16) and joining the carbon material (12) and metal material (14) thereby creating a uniform bond between the carbon material (12) and metal material (14) for use in a dual graphite energy storage cell or battery.

## Description

### BACKGROUND OF THE INVENTION

### 1. FIELD OF THE INVENTION

The present invention relates to a carbon to metal connection and methods of making same. More specifically, the present invention relates to a low resistance electrical and thermal bond between carbon, metal and the method of making same for a dual graphite battery or energy storage cell.

### 2. DESCRIPTION OF RELATED ART

Forming a bond between carbon and metal is difficult. If the application requires the connections to be electrically and thermally conductive, the difficulty is compounded. Conventional methods such as soldering tend to be ineffective due to carbon's lack of a liquid phase and it's inability to be easily wetted.

Unlike metal to metal connections, carbon to metal connections in the prior art are inconsistent in thickness and uniformity, and relatively high in resistance. The higher resistance is generally due to the fact that the connections formed are non-uniform, physical only through pressure contact or close proximity, and occur between two very dissimilar materials.

For example, United States Patent No. 5,858,530 to McCullough, discloses a method for making a carbon to metal connection by electroplating the carbon with copper (Cu) or other metals. The metallic plating forms a conductive physical bond between the metal and the carbon. Several problems with plating are inherent with the process. The process is very time consuming, dirty, wasteful, and relatively expensive.

Another problem with the plating method is inconsistency of results. It is very difficult to control thickness and uniformity of the metal plating, especially when handling carbons of varying conductivities. Sample micrographs frequently show void areas between the plated metal and the carbon fiber 12, especially after sample agitation. Because of these problems, metal plating is not a most desirable method for making a metal to carbon connection.

Other prior art techniques require the carbon-metal contact to remain out of contact with the electrolyte, or that a noble metal be used which does not dissolve in the electrolyte under use conditions. It is desirable to avoid these restrictions to provide useful product.

While brazing techniques and compounds are well discussed in the literature, the carbon/graphite bonding techniques focus mainly on carbon/graphite containing ceramics, carbon/graphite composites, carbon rods, pressed carbon powders, loose carbon powders; and the resulting data focuses mainly on sheer strength. There is no disclosure of any benefits of brazing in creating a carbon to metal connection for use in developing a low resistance electrical and thermal bond. Further, there is no disclosure of the use of a brazing method or any similar method for creating such a bond.

It would be useful in using electroconductive carbon and graphite in the form of fibers, bundles of fibers, cloths and foams in batteries, fuel cells, electrochemical cells, dual graphite energy storage cells, electrochemical reactions and the like, to develop methods for making the lowest possible resistance connections between the carbon/graphite and the metal or metal alloy collector, wire, etc.

### SUMMARY OF THE INVENTION

According to the present invention, there is provided a method of creating a carbon to metal connection by placing a portion of a carbon material onto a metal material at a location where a thermal or electrical contact is desired and then joining the carbon material and metal material, thereby creating a uniform bond therebetween. Also provided by the present invention is a carbon to metal connection for use in a dual graphite battery including a carbon material having multiple sides and a metal material joined to the carbon material whereby the connection is made by placing a portion of the carbon material onto the metal material at the location for the desired connection and joining the carbon material and metal material thereby creating a uniform bond between the carbon material and metal material for use in a dual graphite energy storage cell or battery.

### DESCRIPTION OF THE DRAWINGS

Other advantages of the present invention will be readily appreciated as the same becomes better understood by reference to the following detailed description when considered in connection with the accompanying drawings wherein:
Fig. 1 is a partial cross-sectional view of the encapsulated fiber ends and metal substrate of the electrode component of the present invention;

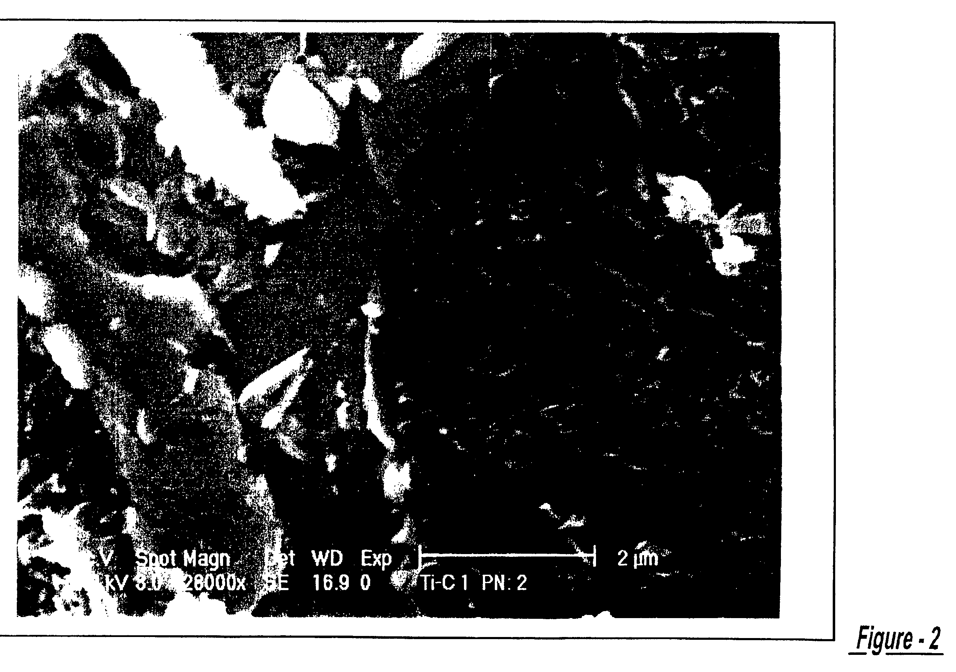

Fig. 2 is a partial cross-sectional view of the encapsulated, carbon inked fiber ends and metal substrate of the electrode component of the present invention;

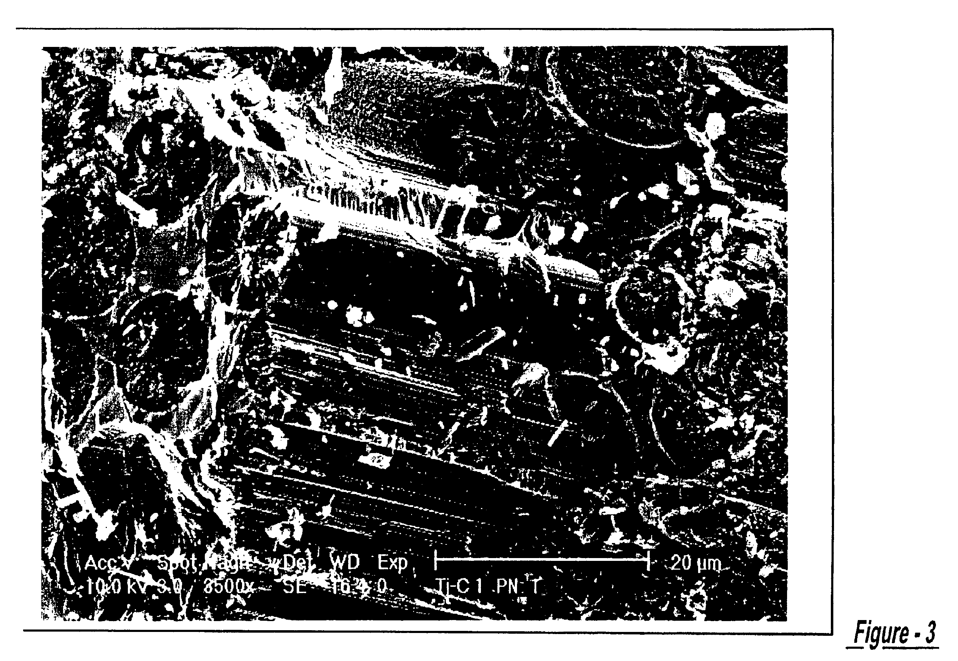

Fig. 3 is a 28,000x scanning electron microscopy picture showing a close-up of the bond formation area derived between the carbon material 12, metal/allow powder, and the metal/alloy substrate from a plasma arc welding sample; and
Fig. 4 is a 3,500x scanning electron microscopy picturing showing the expanded view of the bond formation area derived between a carbon material 12, metal/alloy powder, and the metal/alloy substrate from a plasma arc welding sample.

### DETAILED DESCRIPTION OF THE INVENTION

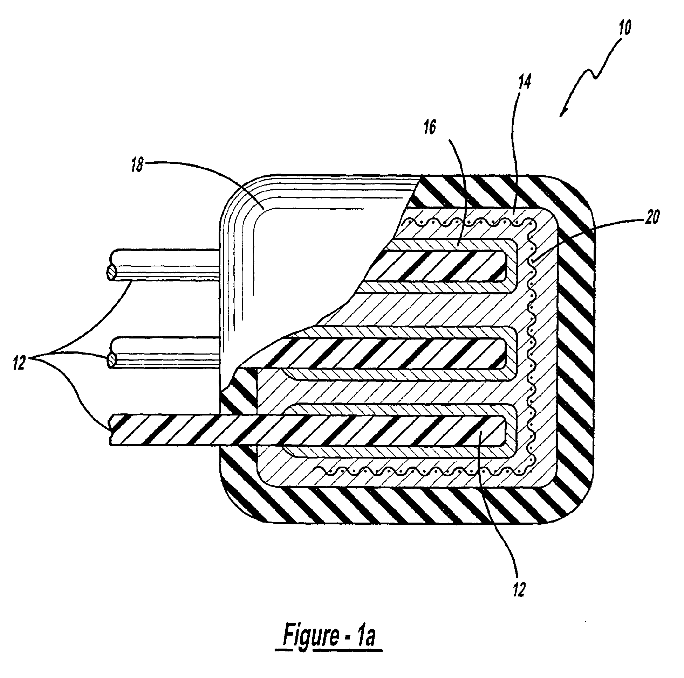

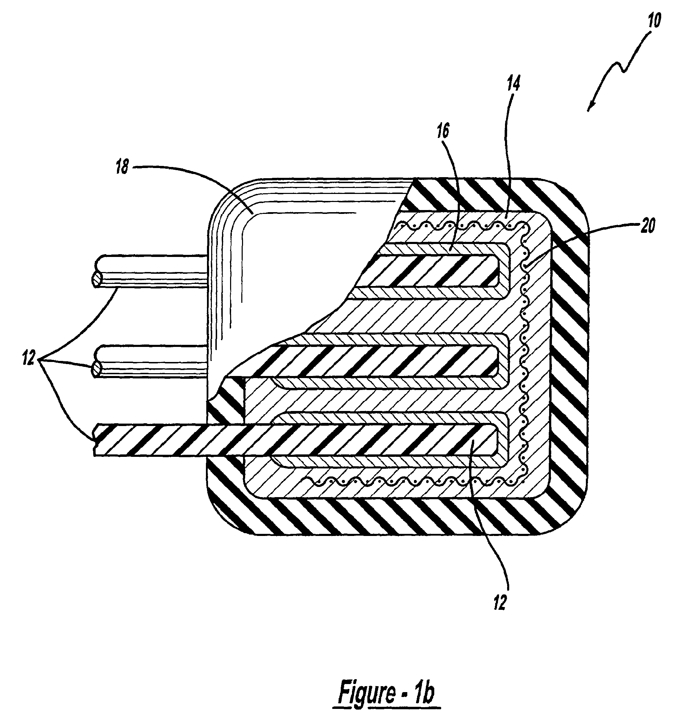

Generally, a item having therein a carbon to metal connection made in accordance with the present invention is generally shown at 10 in Figure 1. The item of the present invention includes a carbon to metal connection 16. The carbon to metal connection 16 is created by placing a portion of a carbon material 12 onto a metal material 14 at a location where it is desired to have electrical or thermal contact and joining the carbon material 12 and metal material 14 thereby creating a uniform bond between the carbon material 12 and the metal material 14 for use in the dual graphite energy storage cell or battery 10.

By "carbon material 12" as used herein, the term is intended to include any material made of carbonaceous or graphitic material. Examples of the carbon materials 12 include, but are not limited to, a single conductive fiber, a multiplicity of conductive fibers, a multiplicity of conductive fibers formed into a cloth or mat, a carbon foam, carbon material 12 wherein the fibers are thermally fused to each other, and other similar materials known to those of skill in the art.

By "metal material 14" as used herein the term is intended to include any metal, metal blend, metal alloy, or combinations thereof having a reasonable conductivity. Example of the metals include, but are not limited to, Ag, Al, Au, Bi, Co, Cr, Cu, Fe, Ga, In, Mg, Mn, Ni, Pb, Sb, Sn, Pt, Pd, Ti, Zn, and alloy compounds thereof.

By "joining" as used herein, the term is meant to include methods which include, but are not limited to, heating, casting, metal sputtering, vacuum deposition of metal, hot tinning, reflow soldering, electron beam welding, chemical vapor deposition, laser welding, inks, and other similar methods known to those of skill in the art.

By "coating 18" as used herein, the term is intended to include any material capable of covering metal material 14 and protecting the metal 14 from degradation. The coating 18 can include, but is not limited to, an oxidizable metal, which is then oxidized and a non-conductive polymeric material.

While many techniques are used to make electrical and thermal connections 16 to carbon/graphite, most are pressure point, physical only contacts, and often include the use of a low conductive (or non-conductive) binder. The physical contacts are frequently non-uniform and can be difficult to control. The method of the present invention creates a lower resistance, more uniform connection 16 to many forms of carbon through a process that is easily controlled.

Of extreme importance, in any application using carbon/graphite materials, is that the contact between every individual fiber piece is carried completely to the exterior of the device, or to the central area of thermal or electrical collection. Electrically and thermally conductive bonds must, therefore, occur between every individual fiber and the metal 14, then, in turn, every individual fiber to the other fibers in the bundle (tow), every fiber bundle to every other fiber bundle in the cloth formation used, and finally to the entire metal substrate 14 in order to obtain 100% utilization of all carbon/graphite in the system where a cloth is used. Therefore, penetration and uniform bond formation with all portions of the carbon/graphite are required. In the case of cloth use, it can be difficult to penetrate the tow bundle in order to capture all fibers therein, due simply to the spatial relation of the individual fibers. The methods disclosed herein accomplish the 100% penetration/bond formation/utilization that is difficult with the method disclosed in the prior art.

The invention herein is applicable to a wide variety of conductive materials. For example, the invention is applicable to various forms and grades of carbon and graphite particularly graphite fibers, formed from coal tar or petroleum pitches which are heat treated to graphitize to some degree the carbonaceous matter. In addition, the method is also applicable to various polymers which, when heated to above about 800°C, lose their non-carbon or substantially lose their non-carbon elements yielding a graphite like material (a material having substantial polyaromatic configurations or conjugated double bond structures) which results in the structure becoming conductive and are in part at least graphitic in form.

Complete connection to all carbon/graphite is essential to obtain full utilization of the material in any use. The connection keeps the amount of the relatively expensive materials to a minimum, which translates to lower product costs and waste. For a battery 10, this also translates to the ability to obtain higher energy densities by using only the stoichiometric amount of materials required for the system to function. In the case of a dual graphite energy storage device, poor utilization of the carbon material 12 leads to overall loss in cell capacity.

Carbon/graphite fibers, and their various forms, have the least amount of resistance in the axial direction, or along the length of the fiber. Electrical and thermal energy is carried more efficiently along the length of a fiber than it is between fibers which are only in direct physical contact with each other, even when these fibers are held under pressure or with binders. Binders themselves, though often called conductive, are not as conductive as the fiber itself. Fibers that have only surface contacts with each other, have a large increased resistance between them due to these factors. For these reasons, it is preferential to utilize all fibers in a manner which takes advantage of the low resistance axial direction. For this reason, continuous fibers are often preferential to any form of carbon powder, chopped fibers, felt type mats, mesocarbon microbeads, etc. Accomplishing a contact point with continuous fibers has its own inherent difficulties, including handling issues due to fiber brittleness, etc. However, the methods of the present invention provide an improved method for fiber to metal contacts in all forms while maintaining low resistance.

The present invention provides low resistance electrical and thermal connections 16 that can be prepared between a conductive material (carbon, graphite, and the like) and a conductive metal 20 or metal alloy by plasma arc or resistance welding the cloth, or the material or individual fiber ends or bundles of fibers ends, to a conductive metal 20 or metal alloy. The connection 16 can be facilitated by the use of a metallic or metallic alloy powder or wire to help wet the fiber material.

In a preferred embodiment of the present invention, the low resistance electrical and thermal connections 16 are created through the use of heat, casting, metal sputtering, vacuum deposition of metal, hot tinning, reflow soldering, electron beam welding, chemical vapor deposition, or laser welding.

A working temperature of greater than 800°C is achieved between the carbon material 12 and the metal substrate 14 in order to meet necessary wettability requirements of the carbon material 12 while obtaining a low resistance chemical and/or physical bond between the two dissimilar materials. Additionally, a low resistance electrical and thermal connection 16 can be prepared through the use of a fine granule carbon and solvent based ink or paint which is compressed and heat treated while positioned between the carbon material 12 and the metal substrate 14 thereby allowing a chemical and/or physical bond to form.

In most end uses it is desirable to have the collector metal 14 insulated against both electrical contact with and/or chemical attack by the use environment. The collector metal 14 can be encapsulated in an electrical insulating material such as a cured resin-hardener blend that is highly crosslinked and provides a system with a Tg of ≥ 69 ± 4C, or the metal 14 can be coated with an oxide or oxidizable metal, all of which withstand chemical attack by the use environment. Resin-hardener blends are relatively easy to handle and cure quickly at reasonable temperatures of between 60°C to 100°C. The blends can be applied by various means including dipping, roll coating, pressure filling, and spraying. The method applied often depends on the exact material used, since working times and desired thickness are known to vary. It is to be further understood that encapsulation can be dispensed with if the conductive metal 20/alloy applied is oxidizable to produce a non-conductive coating 18 or surface which is non-reactive under the conditions of use.

These techniques can be applied to any carbon/graphite form. Those forms which require the lowest number of connection sites 16 have the least amount of collector area that must be accommodated in an end use. In applications where weight and or space is a critical factor, the least amount of collector weight and area used by the collector is typically an important consideration, since it is this collector that generally contributes the most in terms of weight, space, and often cost. Specifically in a battery 10, the reduced amount of collector translates to improved energy density of the end products, which in turn provides more possible end uses, and lower costs.

Carbon/graphite powders, chopped fibers, felt type mats, mesocarbon microbeads, etc., require an individual contact point for every piece of carbon/graphite to the collector. This often means that the collector has a large surface area, and thus uses a great deal of space, adds extra weight and costs to the end product. Continuous fibers of various forms therefore are often the preferred material. For example, a woven cloth contains continuous fibers that run in two directions which are generally perpendicular to each other. The woven cloth has fiber ends exposed on four sides. The woven cloth then requires at least two edges of collection to utilize all carbon/graphite materials in the cloth, and thus takes more space and weight for current collection than for instance a unidirectional cloth, but less than is required for a graphite felt which would have one entire side of the material coated as a collector. Unidirectional cloths, or braids such as biaxial or triaxial, contain continuous fibers that run in essentially one direction. The fibers start and then end with only two edges of exposed fiber ends, these then require only one edge of collection. A carbon/graphite foam, or mat of thermally bonded fibers, requires only one point of collection to attach all carbon/graphite together, since the material is fused together creating essentially one continuous fiber.

The thickness of the metallic collection material is also critical to overall battery energy density. In dual graphite energy storage systems the metallic collection material is not directly involved in the battery processes, except to carry electrical energy to and from the device. The metallic collection material is then considered an inactive weight material. When an inactive material is reduced in weight and/or space, the cell energy density is increased; therefore, the less collector material, the higher the energy density. For this reason, the less of the metallic materials used in the end product the better. The only factors which then limit the low end of collector amount are the fiber utilization and the electrical and/or thermal carrying requirements. A complete diffusion layer between the carbon fiber 12 and the metal 14 must be maintained to minimize the resistance. There must be complete coverage of fiber with metal 14 in the desired collector location and the metal 14 should be distributed in equal thickness over the fiber.

The methods of the present invention overcome the problems of the prior art by creating a method which is more time efficient, has greater ease of control, the flexible fibers are able to stay within a set geometry during processing, and preferably there is no hazardous materials handling during the process.

Due to the various collector forms and uses, corrosion resistance of the metals employed as collectors have been approached in many ways. This is especially true in a battery system 10 where the environmental conditions are often very harsh, and in the case of lithium ion batteries, this often influences the active materials chosen for the electrochemical cells. Due to the reduced area of collector in a dual graphite energy storage system using the various forms of continuous fibers, the corrosion resistance of the collector materials is a less complicated matter. The collector is relatively easy to encapsulate or treat for corrosion resistance without fear of interfering in the fiber to collector bond.

The metal collector 14 can be alternatively coated with an oxide or oxidizable metal, all of which withstand chemical attack by the use environment. It is to be further understood that encapsulation of any type can be dispensed with if the conductive metal 20/alloy applied as the collector is oxidizable to produce a non-conductive coating 18 or surface which is non-reactive under the conditions of use.

Although particular embodiments of the present invention have been described in the foregoing description, it will be understood by those skilled in the art that the invention is capable of numerous modifications, substitutions and rearrangements without departing from the spirit or essential attributes of the invention.

The above discussion provides a factual basis for the use of the carbon to metal connection 16. The method used with and the utility of the present invention can be shown by the following non-limiting examples and accompanying figures.

### EXAMPLES

### EXAMPLE 1

Plasma arc welding of a unidirectional carbon fiber 12 cloth to a metal substrate 14 to obtain a low resistance bond between the two materials was performed using the following steps. The metal substrate 14, which in this instance is Ti Grade 1Cp with a thickness of 0.010inch, is positioned in an automatic moving table that keeps all materials and weld tips under a constant atmosphere of Argon (Ar) during a weld. The desired carbon fiber cloth 12 piece size is cut from a unidirectional cloth of approximately 60MSI carbon graphite fiber, and is positioned on top of the Ti metal ribbon (1.9 x 22cm) using a series of positioning sets in the moving table apparatus. The carbon fiber unidirectional cloth 12 sits essentially perpendicular to the length of the metal ribbon (or foil strip). The weld tip torch distance from the fiber is set, according to the equipment scale only (not a true distance), between 1-12/32 & 1-13/32inches. Shield gas of Argon (Ar) runs along side the weld torch to ensure inert atmosphere at the weld point. This reduces the amount of metal oxidation that occurs during the weld. A working gas of Ar is also required for the arc weld to occur.

In this example the metal powder used is Ti/Cu (50/50 by weight). The metal powder is fed into the weld tip during the weld process so that the feed rate (i.e. g/sec) deposits an appropriate amount of powder for the table speed. As the weld process is started, the table is moved automatically (electronically controlled), so that the tip movement rate allows for a good weld. Table rate is dependent upon powder feed rate to avoid "puddles" of powder being welded in one spot and to avoid too little powder being used to obtain a good weld. The powder, the metal substrate 14, and at least the carbon fiber surface 12 are bonded together during the high temperature plasma arc weld. This is confirmed through SEM, high resolution microscopy, and the electrical continuity was verified as the resistance was found to be within the expected limits of the resistance of the graphite fiber. After the welding was complete, the electrode was allowed to sit in air to oxidize the metal surfaces 14 and make them more stable in an energy storage device environment.

### EXAMPLE 2

Resistance welding of a unidirectional carbon fiber cloth 12 to a metal substrate 14 to obtain a bond between the two materials was performed using the following steps. The metal substrate 14, which in this instance is Cu foil with a thickness of 0.010inch, is positioned in a metal brake to fold the metal ribbon 90 degrees at center. The desired carbon fiber cloth piece 12 is cut from a unidirectional cloth of approximately 60MSI carbon graphite fiber. The cloth end fibers 12 are submersed in a powder bath to help increase the penetration of the bonding into the bulk of the carbon fiber tows 12. The powder used in this case is Ti/Cu/Ni (60/15/25 by weight). The fiber 12 is positioned in the bend of the metal ribbon so that the carbon fiber unidirectional cloth 12 is essentially surrounded by the metal ribbon (or foil strip), and is tucked into the folded metal 14. The folded metal containing the powder and fiber is then mechanically pressed together for a superficial bond. All materials are then placed under a constant atmosphere of Argon (Ar) before and during the resistance weld. The powder, the metal substrate 14, and at least the carbon fiber surface 12 are bonded together during the high temperature weld; this is confirmed through SEM, high resolution microscopy, and the electrical continuity was verified as the resistance was found to be within the expected limits of the resistance of the graphite fiber.

### EXAMPLE 3

Carbon ink deposition between a unidirectional carbon fiber cloth 12 and a metal substrate 14 to obtain a bond between the materials was performed using the following steps. The metal substrate 14, which in this instance is Al with a thickness of 0.010inch, is positioned in a metal brake to fold the metal ribbon in half. The desired carbon fiber cloth piece 12 is cut from a unidirectional cloth of approximately 60MSI carbon graphite fiber. The cloth end fibers 12 are submersed in a carbon ink bath to help increase the penetration of the paint into the bulk of the carbon fiber tows 12. The ink used in this case is Engelhard Corp. carbon ink "LT1 A6162-XA". The fiber is positioned in the bend of the Al metal ribbon so that the carbon fiber unidirectional cloth 12 is essentially surrounded by the metal ribbon (or foil strip), and is tucked into the folded metal. The folded metal containing the ink and fiber is then mechanically pressed together for a superficial bond. All materials are then placed in a constant temperature oven. The powder, the metal substrate 14, and at least the carbon fiber surface 12 are bonded together during the high temperature treatment; this is confirmed through SEM, high resolution microscopy, and the electrical continuity was verified as the resistance was found to be within the expected limits of the resistance of the graphite fiber.

Throughout this application, various publications, including United States patents, are referenced by author and year and patents by number. Full citations for the publications are listed below. The disclosures of these publications and patents in their entireties are hereby incorporated by reference into this application in order to more fully describe the state of the art to which this invention pertains.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims, the invention can be practiced otherwise than as specifically described.

## Claims

1. A method of creating a carbon to metal connection by:
placing a portion of a carbon material onto a metal material at a location for an electrical or thermal contact and joining the carbon material and metal material thereby creating a uniform bond between the carbon material and the metal material.

2. The method according to claim 1, wherein said joining step includes joining the carbon material and the metal material using a method selected from the group consisting essentially of welding, placing a conductive carbon and solvent based ink at the location of contact, vacuum deposition of metal, hot tinning, reflow soldering, electron beam welding, chemical vapor deposition, metal sputtering, casting and laser welding.

3. The metal according to claim 2, wherein said welding step includes welding the carbon material to the metal material containing at least one carbide forming element, said metal material using a conductive metal selected form the group consisting essentially of conductive metal powder and conductive metal wire.

4. The method according to claim 3, wherein said welding step further includes weld wetting the carbon material with the metal material or the conductive metal, said wetting creating an electrically and thermally conductive bond between the carbon material and the metals. conductive metal, said wetting creating an electrically and thermally conductive bond between the carbon material and the metals.

5. The method according to claim 2, further including the step of coating the metal area with an oxidizable metal and oxidizing the metal.

6. The method according to claim 2, further including the step of coating the metal with a non-conductive polymeric material.

7. The method according to claim 4, wherein said placing step includes folding the metal material to increase contact between the carbon material and the metal material.

8. The method according to claim 2, wherein said placing step including placing the conductive ink, paste paint at the location of contact, compressing the metal material into the carbon material thereby forcing the conductive ink into void spaces in the carbon material and heat treating the compressed location of contact.

9. The method according to claim 8, wherein said placing step includes folding the metal material to increase contact between the carbon material and the metal material.

10. A carbon to metal connection for use in a dual graphite battery comprising:
a carbon material having multiple sides; and
a metal material joined to said carbon material with the method set forth in claim 1.

11. The connection according to claim 10, further including a conductive metal substrate connecting said carbon material and said metal material.

12. The connection according to claim 11, wherein said conductive metal substrate is selected form the group consisting essentially of Ag, Al, Au, Bi, Co, Cr, Cu, Fe, Ga, In, Mg, Mn, Ni, Pb, Sb, Sn, Pt, Pd, Ti, Zn, alloy compounds thereof, and mixture thereof.

13. The connection according to claim 12, wherein said conductive metal substrate is preferably from the group consisting essentially of 100% Ti, a Ti metal alloy, a Ti metal mixture, Cu metal, Cu metal alloy, Al metal, Al metal alloy, Ni metal, Ni metal alloy.

14. The connection according to claim 11, wherein said conductive metal substrate is in a form selected from the group consisting essentially of expanded foil mesh, woven foil mesh, wire, ribbon, and sheet form.

15. The connection according to claim 11, wherein said conductive metal substrate is in contact with one of said sides of said carbon material.

16. The connection according to claim 11, wherein said conductive metal substrate is folded thereby contacting said carbon material on two of said sides.

17. The connection according to claim 10, wherein said carbon material is selected from the group consisting essentially of a single conductive fiber, a multiplicity of conductive fibers, a multiplicity of conductive fibers formed into a cloth, a carbon foam and a carbon material wherein the fibers are thermally fused to each other.

18. The connection according to claim 10, said connection including a coating means for coating the metal area.

19. The connection according to claim 18, wherein said coating means is selected from the group consisting essentially of an oxidizing metal and a non-conductive polymeric material.
